# EUROPEAN PATENT SPECIFICATION

(11) **EP 2 685 310 B1**
(45) Date of publication and mention of the grant of the patent: **13.12.2017**
(21) Application number: 12176106.8
(22) Date of filing: 12.07.2012
(51) Int. Cl.: G03B 11/04, G03B 15/05, G03B 17/02, G08B 13/196, H04N 5/225

(54) **Dome camera for low light conditions**
Dome-Kamera für lichtarme Bedingungen
Caméra à dôme pour des conditions de faible éclairage

(43) Date of publication of application: 15.01.2014
(73) Proprietor: Axis AB, 223 69 Lund (SE)
(72) Inventor: Persson, Henrik, 222 21 Lund (SE); Ryzak, Jan, 214 23 Malmö (SE)
(74) Representative: Awapatent AB

(56) References cited:
- CN-U- 201 955 595
- CN-U- 202 085 238
- JP-A- 2003 008 954
- JP-A- 2004 159 253

## Description

### Technical field

The present invention relates to the field of cameras. In particular it relates to a camera having a dome-shaped cover.

### Background

Dome cameras are popular in the surveillance industry. By a dome camera is generally meant a camera unit being mounted inside a dome-shaped cover which may be in the form of a "glass bubble". Compared to traditional surveillance cameras without a dome-shaped cover, such as traditional pan/tilt/zoom cameras, they are considered more aesthetic and less intimidating. A problem with dome cameras and surveillance cameras in general is their performance during low light conditions, such as during night.

For cameras without a dome cover it is known to have powerful infrared (IR) lamps mounted on the sides of the camera to sweep round and light up whichever area the camera is focused on. However, for dome cameras further considerations have to be made. For example, it is known that it is problematic to fit an IR lamp inside of the dome, partially because of size considerations and problems with overheating, but also because of internal reflection in the dome cover of light emitted by the IR lamp. Such reflections result in a deteriorated image quality of images captured by the dome camera.

Still, there have been some attempts to use IR lighting with dome cameras. Such attempts include combining the dome camera with an external IR lamp. It is also known that it may be advantageous to use a dome cover having a clear glass instead of a tinted glass in order to maximise the low light performance.

Although the prior art solution of combining a dome camera with an external IR light source improves the low light performance of a dome camera it still has some drawbacks. For example, the prior art solution provides a bulky and non-compact dome camera system. Thus there is a need for improvements.

JP2003008954 A discloses a dome camera comprising a dome-shaped cover, a camera, a light shield, and a light emitting element. The light shield is inserted in slits formed in the cover. The light shield may in this way intercept light emitted by the light emitting element from reaching the camera.

CN202085238 U discloses a similar arrangement. In CN202085238, light insulation grooves are formed on the dome cover that receive mating light insulation ribs formed on the light shield.

CN201955595 U discloses a light shield for a dome camera being in the form of a ray isolating ring. When used in a dome camera, the ray isolating surface of the ring adopts to the inclined surface designs of the dome so that the refracted rays are better isolated.

JP2004159253 A discloses a light shield for a dome camera. The light shield is made of an elastic material and contacts an inner surface of a dome-shaped cover so as to surround a camera.

### Summary of the invention

In view of the above, it is thus an object of the present invention to provide a dome camera which is compact at the same time as it has a good performance at low light conditions.

A further object of the invention is to provide a dome camera which reduces internal reflections from the dome cover.

According to the invention, the above objects are achieved by a dome camera comprising: a base member, a dome-shaped cover arranged at the base member whereby the dome-shaped cover and the base member define a space, an optical member comprising a lens arranged in the space, a light emitting element arranged in the space at a distance from the optical member, and a light shielding element arranged between the optical member and the light emitting element in the space so as to shield the lens of the optical member from light emitted by the light emitting element, wherein the light shielding element divides the space into two separate subspaces, wherein the optical member is arranged in a first of the subspaces and the light emitting element is arranged in a second of the subspaces, and wherein said light shielding element abuts an inwardly facing surface of the dome-shaped cover at a portion of the dome-shaped cover in order to prevent leakage of light emitted by the light emitting element from said second subspace into said first subspace, wherein the portion of the dome-shaped cover where the light shielding element abuts the inwardly facing surface of the dome-shaped cover is made of a material comprising a light absorbing agent which absorbs light in a wavelength range corresponding to light emitted by the light emitting element. The light absorbing agent is an additive forming light absorbing particles within the material of the dome-shaped cover.

The dome camera of the invention is compact since the light emitting element is comprised inside of the dome-shaped cover. Further, the dome camera has an improved performance at low light conditions since the light emitting element illuminates the surroundings of which the dome camera captures images.

The light shielding element is arranged between the optical member and the light emitting element. In this way reflections of light inside of the dome-shaped cover caused by light from the light emitting element are prevented from reaching the lens of the optical member.

However, light may also travel inside of the dome-shaped cover due to total internal reflections in the inner walls of the dome-shaped cover. In other words, the dome-shaped cover serves as a light guide for light. In order to reduce the capability of the dome-shaped cover to guide light from the light emitting element to the lens, at least a portion of the dome-shaped cover includes a material which comprises a light absorbing agent. In this way, the stray light traveling in the dome-shaped cover looses enough power to not cause any reflections when reaching the lens.

The light shielding element thus divides the space into two separate subspaces wherein the optical member is arranged in a first of the subspaces and the light emitting element is arranged in a second of the subspaces. With this arrangement the optical member and the light emitting element are comprised in two separate subspaces such that the optical member is shielded from light emitted by the light emitting element.

A portion of the light shielding element is in abutment with an inwardly facing surface of the dome-shaped cover in order to prevent leakage of light emitted by the light emitting element from the second subspace into the first subspace. This is advantageous in that a light tight seal is achieved between the first and the second subspace.

A length L of the portion of the light shielding element may be larger than a thickness W of the dome-shaped cover. The thickness W corresponds to the shortest distance between the inwardly facing surface and an outwardly facing surface of the dome-shaped cover. The length L is defined as the shortest distance along the inwardly facing surface between an inner point of the portion and an outer point of the portion.

An inner point on the portion is defined as a point on an inner periphery of the portion. Likewise, outer point on the portion is defined as a point on an outer periphery of the portion. Thus the length L corresponds to the shortest distance between an inner periphery and an outer periphery of the abutting portion. The inner periphery is inside of the outer periphery with respect to the optical axis of the optical member. In other words, the inner periphery is closer to the optical axis than the outer periphery.

As explained above, a dome-shaped cover comprising a light absorbing agent is advantageous in that it reduces the capability of the cover to serve as a light guide. However, the light absorbing agent also has the undesired effect that the transmittance of light through the dome-shaped cover is reduced. There is thus a trade-off between the transmittance of light through the cover and the reduction of light traveling inside of the dome-shaped cover from the second subspace to the first subspace.

In order for light to travel from the second subspace to the first subspace it has to travel a distance inside of the dome-shaped cover which depends on the length L and the thickness W. On one hand, since the amount of light being absorbed in the dome-shaped cover depends on how far the light travels in the dome-shaped cover, it is thus advantageous to have large values of the thickness W and the length L in order to reduce the light traveling from the second subspace to the first subspace. In order for light to pass from the inside to the outside of the dome-shaped cover it has to travel at least a distance corresponding to the thickness W inside of the dome-shaped cover. On the other hand it is thus advantageous to have a small value of the thickness W in order to increase the transmittance of light through the dome-shaped cover.

When selecting the values of the thickness W and the length L, one may proceed as follows. First a thickness W giving rise to an acceptable value of the transmittance may be chosen. Alternatively, for a fixed value of the thickness W, a concentration of the light absorbing agent may be chosen which gives rise to an acceptable value of the transmittance. Then, for the chosen or fixed value of the thickness W, a length L may be selected which gives rise to an acceptable value of the reduction of light traveling from the second subspace to the first subspace. Preferably, the length L is chosen to be larger than the thickness W. In this way an acceptable transmittance through the dome may be achieved at the same time as the undesired reflections due to light guidance inside of the dome are reduced.

The ratio of said length L to said thickness W may be larger than two and preferably larger than three. For such ratios an advantageous trade-off between transmittance and reduction of undesired reflections is achieved.

In one embodiment the light absorbing agent comprises a pigment.

In one embodiment the light emitting element is arranged to emit infrared light and the light absorbing agent comprises an IR-absorbing agent. The use of IR light for surveillance purposes is advantageous in several respects. For example, by IR based surveillance it is possible to detect living objects, such as a human intruder, even under low light conditions. Further, having a light emitting element operating in the IR part of the spectrum is advantageous in that the emitted light is invisible to a human. Thereby, the light emitted by the light emitting element cannot be detected by a human.

In one embodiment, the optical member is arranged at the base member and the light shielding element surrounds the optical member in a direction perpendicular to an optical axis of the optical member. This is advantageous in that the light shielding elements shields light from all directions perpendicular from the optical axis. For example, a simple and flexible solution is obtained by letting the light shielding element have a circular-symmetric shape with respect to the optical axis. Moreover, a cross-section of the abutting portion of the light shielding element taken perpendicularly to the optical axis may have an essentially circular shape.

It is noted that the invention is defined by the appended claims. Generally, all terms used in the claims are to be interpreted according to their ordinary meaning in the technical field, unless explicitly defined otherwise herein. All references to "a/an/the [device, member, element, etc.]" are to be interpreted openly as referring to at least one instance of said device, member, element etc., unless explicitly stated otherwise.

### Brief Description of the Drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a schematic cross-sectional side view of a dome camera according to an embodiment of the invention;
Fig. 2 is a schematic top view of the dome camera of Fig. 1;
Fig. 3 is a partial cross-sectional side view of a dome camera having a dome-shaped cover which does not comprise a light absorbing agent. The figure schematically illustrates reflections in the dome-shaped cover of light emitted by a light emitting element;
Fig. 4 is a partial cross-sectional side view of a dome camera having a dome-shaped cover which comprises a light absorbing agent in accordance with embodiments of the invention. The figure schematically illustrates the absorption in the dome-shaped cover of light emitted by a light emitting element.

### Detailed description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

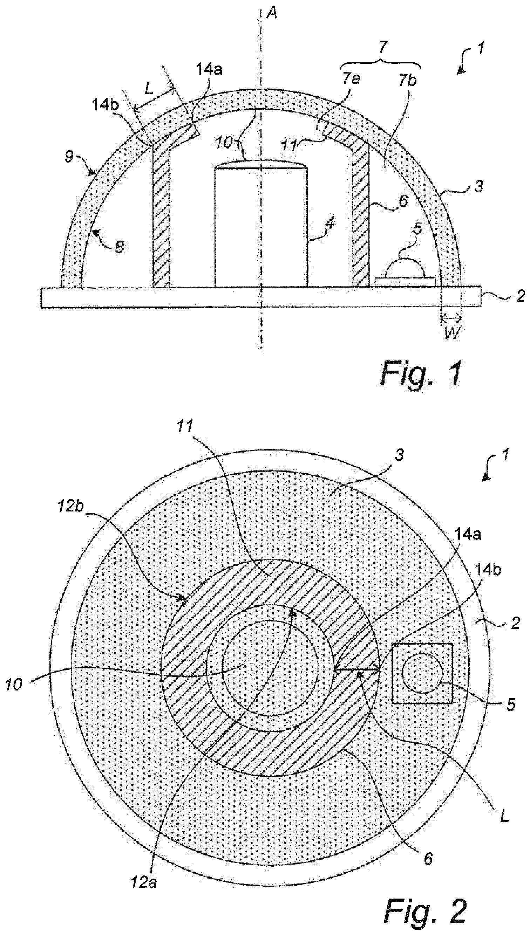

Figs 1-2 illustrates a dome camera 1. The dome camera 1 comprises a base member 2, a dome-shaped cover 3, an optical member 4, a light emitting element 5, and a light shielding element 6.

The base member 2 may be of any form known in the art. For example it may be in the form of a plate. The plate may be hollow in order to comprise functionality of the dome camera, such as control functionality as further discussed below. The plate may for example have a circular or a square shape as is known in the art. In the illustrated embodiment the base member 2 is a plate having a circular shape.

The dome-shaped cover 3 is arranged on the base member 2. More precisely, the dome-shaped cover 3, which may be in the form of a half-sphere or a half-sphere extended by a cylindrical portion, is arranged on the base member 2 so as to define a space 7 together with the base member 2. The space 7 may be a closed space. However, in some embodiments the space 7 is an open space. For example, there may be opening in the base member 2 or an opening between the base member 2 and the dome-shaped cover 3. The dome-shaped cover 3 has an inwardly facing surface 8 which faces the space 7. Further, the dome-shaped cover 3 has an outwardly facing surface 9 which faces the outside of the dome-shaped cover 3. The dome-shaped cover further has a thickness W corresponding to the shortest distance between the inwardly facing surface 8 and the outwardly facing surface 9. A general purpose of the dome-shaped cover is to prevent the optical member 4 from damage or vandalism.

The optical member 4 is arranged in the space 7. Specifically, the optical member 4 may be arranged in a first subspace 7a of the space 7. For example, as illustrated in Fig. 1, the optical member 4 may be arranged on or in connection to the base member 2. Particularly, the optical member 4 may be arranged at the centre of the base member 2. The optical member 4 is associated with an optical axis A. In Fig. 1 the optical axis A coincides with a symmetry axis of the dome-shaped cover although this does not have to be the case.

The optical member 4 comprises a lens 10. The lens 10 may be part of a lens system comprising at least the lens 10. Further the optical member 4 comprises an image sensor which is sensitive to and may register light entering the optical member 4 through the lens 10. In other words, the optical member 4 is arranged to capture images based on light entering the dome camera 1 according to known techniques. The image sensor may for example be mounted to the lens 10 or the lens system comprising the lens 10 by means of a holder.

The dome camera 1 may further comprise mechanical members (not shown) which for example may be used to control the direction of the optical member 4, such as a pan direction and a tilt direction. Such mechanical members may for example be arranged in or in connection to the base member 2. The optical member 4 may be connected to a control device. For example the control device may be arranged to control parameters of the optical member 4 such as parameters of the lens system and the image sensor. For example the control device may control a zoom factor of the optical member. Further, the control member may be arranged to control the mechanical members which direct the optical member 4. The control device may be arranged in the base member 2.

A light emitting element 5 is arranged in the space 7. Specifically, the light emitting element 5 may be arranged in a second subspace 7b of the space 7. The light emitting element 5 is arranged at a distance from the optical member 4. For example, the light emitting element 5 may be arranged on or at the base member 2. As shown in Fig. 1, the light emitting element may be arranged in the vicinity of the dome-shaped cover 3. Preferably, the light emitting element 5 emits light in a main direction which is parallel to the optical axis A of the optical member 4. Optionally, more than one light emitting element 5 may be arranged in the space 7, and particularly in the subspace 7b. The more than one light emitting element may be arranged in many different arrangements or patterns, such as symmetrically or asymmetrically around the optical member 4, in a circle around the optical member 4, on each side of the optical member 4, etc.

The light emitting element 5 is arranged to emit light in order to improve the lighting conditions in the surrounding of the dome camera 1. In this way the image quality of the images captured by the optical member 4 may be improved. The light emitting element 5 is arranged to emit light in a certain wavelength range. Preferably, the light emitting element 5 is arranged to emit light in a wavelength range of which the image sensor of the optical member 4 is sensitive, that is, a wavelength range of which the optical member 4 may capture images. For example, the light emitted by the light emitting element 5 may be in the visible part of the spectrum, the light emitted by the light emitting element 5 may be in the IR part of the spectrum, the light emitted by the light emitting element 5 may be in the near infrared part of the spectrum, or combinations thereof. Near infrared may be defined as light having a wavelength in the range of about 0.78 µm-3 µm. In general, the light emitting element 5 may be any type of light emitting element 5 known in the art. In particular, the light emitting element 5 may be in the form of a light emitting diode.

A light shielding element 6 is arranged between the optical member 4 and the light emitting element 5. The purpose of the light shielding element 6 is to shield the lens 10 of the optical member 4 from light emitted by the light emitting element 5. In particular, the light shielding element 6 prevents light emitted by the light emitting element 5 to reach the lens 10 directly or via reflections in the inwardly facing surface 8 of the dome-shaped cover 3.

The light shielding element 6, which may be made or rubber or another material suitable for the purpose, may be arranged to divide the space 7 into the two subspaces 7a and 7b which are separated from each other. The first subspace 7a may be located inside of the second subspace 7b. As shown in Fig. 1, the first subspace 7a comprises the optical member 4, and the second subspace 7b comprises the light emitting element 5.

The light shielding member 6 may generally have any shape suitable for shielding the lens 10 from light emitted by the light emitting element 5. In the illustrated embodiment, the light shielding element 6 surrounds the optical member 4 in a direction perpendicular to the optical axis A. For example, the light shielding element 5 may have a circular symmetric shape.

A portion 11 of the light shielding element 6 may be in abutment with the inwardly facing surface 8 of the dome-shaped cover. In this way the light shielding element 6 provides a light tight seal against leakage of light emitted by the light emitting element 5 from the second subspace 7b into the first subspace 7a. In particular, leakage of light between the inwardly facing surface 8 of the dome-shaped cover 3 and the abutment portion 11 is prevented.

The abutment portion 11 is associated with an inner periphery 12a and an outer periphery 12b. The words inner and outer are defined with respect to the optical axis A of the optical member 4. That is, the inner periphery 12a is the periphery of the portion 11 being closest to the optical axis A. Similarly, the outer periphery 12b is the periphery of the portion 11 being farthest away from the optical axis A. In this sense, the inner periphery 12a may be said to be inside of the outer periphery 12b. A point 14a on the inner periphery 12a is referred to as an inner point of the portion 11 and a point 14b on the outer periphery 12b is referred to as an outer point of the portion 11.

The abutment portion 11 is associated with a length L. The length L corresponds to the shortest distance between the inner periphery 12a and the outer periphery 12b measured along the inwardly facing surface 8. Differently stated, the length L of the portion 11 is the shortest distance along the inwardly facing surface 8 between an inner point 14a of the portion 11 and an outer point 14b of the portion 11.

In the illustrated embodiment, the abutment portion 11 of the light shielding element 6 has a circular-symmetric shape. In particular, cross-sections of the abutment portion 11 taken perpendicularly to the optical axis of the optical member 4 have an essentially circular shape. In particular, the inner periphery 12a and the outer periphery 12b form concentric circles centred about the optical axis A, wherein the inner periphery 12a forms the inner circle.

The dome-shaped cover 3 may be made of a strong plastic material such as polycarbonate. Further, at least for a portion of the dome-shaped cover 3, the material of the dome-shaped cover comprises a light absorbing agent. At least the portion of the dome-shaped cover 3 having an inwardly facing surface being in abutment with the portion 11 of the light shielding element 6 is made of a material comprising a light absorbing agent. In the illustrated embodiment the whole dome-shaped cover 3 is made of a material comprising a light absorbing agent. However, in some embodiments only the portion of the dome-shaped cover 3 having an inwardly facing surface being in abutment with the portion 11 of the light shielding element 6 is made of a material comprising a light absorbing agent.

The light absorbing agent is an agent which absorbs light in a specific wavelength range. The light absorbing agent is chosen so as to absorb light in a wavelength range corresponding to the wavelength range of light emitted by the light emitting element 5. For example, the light absorbing agent may be chosen as an agent which absorbs light in the IR range in case the light emitting element 5 emits IR light, the light absorbing agent may be chosen as an agent which absorbs light having a wavelength in a portion of the visible spectrum in case the light emitting element 5 emits light in that wavelength portion, the light absorbing agent may be chosen as an agent which absorbs light in the near IR range in case the light emitting element 5 emits light in the near IR range.

In one embodiment, the light absorbing agent is an additive which is insoluble with respect to the material of the dome-shape cover. Thus, the light absorbing agent forms light absorbing particles within the material of the dome-shaped cover. Such particles may also have a scattering effect with respect to light.

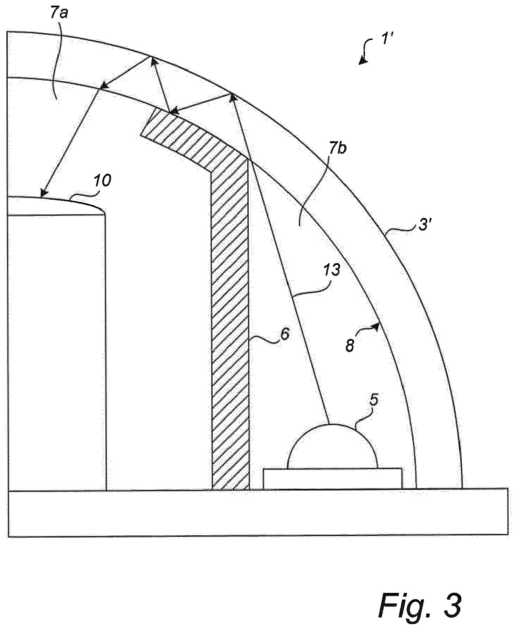

The functionality of the dome camera 1, and in particular the effect of the light absorbing agent, will now be described with reference to Figs 3-4.

Fig. 3 is an example which illustrates a portion of a dome camera 1' which has a dome-shaped cover 3' which in contrast to the invention does not comprise a light absorbing agent. In other regards the dome camera 1' is similar to that of Fig. 1.

As discussed above, the light shielding element 6 is arranged to shield the lens 10 from light emitted by the light emitting element 5. In this way, light emitted by the light emitting element 5 cannot reach the lens 10 directly or via reflections in the inwardly facing surface 8. However, light emitted by the light emitting element 5 may still reach the lens 10 via the dome-shaped cover 3'. In more detail, light emitted by the light emitting element 5 which enters the dome-shaped cover may be subject to total internal reflection in the inner walls of the dome-shaped cover 3'. Thereby, light may be transported inside of the dome shaped cover 3' from the second subspace 7b to the first subspace 7a. In other words, the dome-shaped cover 3' serves as a light guide for light emitted by the light emitting element 5. In Fig. 3 this is illustrated by the light ray 13 which is emitted by the light emitting element 5 and which passes through the inwardly facing surface 8. The light ray 13 is subject to total internal reflection in the dome-shaped cover 13' in such a way that it passes the light shielding element 6. The dome-shaped cover 3 hence acts as a light guide. Having passed the light shielding element 6, the light ray 13 then enters the first subspace 7a where it reaches the lens 10. As a result, images captured through the lens 10 will comprise undesired reflections caused by light from the light emitting element 5.

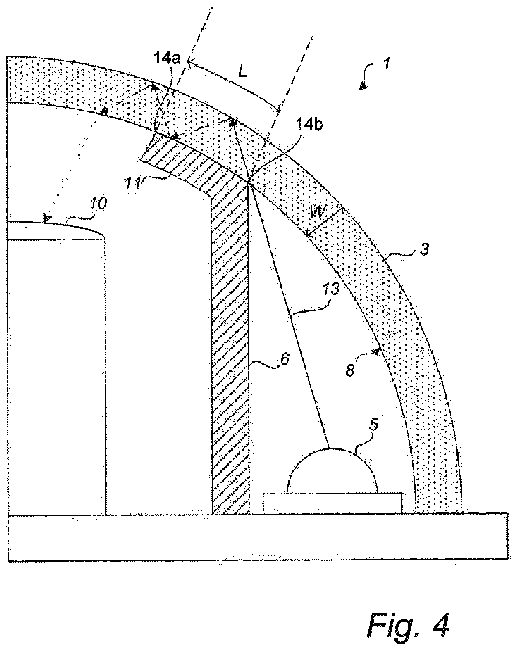

In Fig. 4 the corresponding situation for the dome camera 1 according to an embodiment of the invention is illustrated. A light ray 13 emitted by the light emitting element enters the dome-shaped cover 3 and is subject to total internal reflection in the inner walls of the dome-shaped cover 3. However, since the dome-shaped cover 3 is made of a material which comprises a light absorbing agent, the light ray 13 is at least partially absorbed as it travels through the dome-shaped cover 3. As a result, the light ray 13 looses enough power to not cause any reflections when reaching the camera lens 10. In Fig. 4 this is illustrated by the light ray 13 being represented as a dashed line as it passes the dome-shaped cover 3.

The amount of light absorbed in the dome-shaped cover 3 is related to the length of the path that the light travels through the dome-shaped cover 3. The path length is in turn related to the length L of the abutment portion 11 and the thickness W of the dome-shaped cover 3 (since the light ray 13 at least has to pass the length L by total internal reflection through the dome-shaped cover 3 having thickness W in order to reach the lens 10). In order to reduce the reflections in the lens 10 it is thus desirable to have a large value of the length L and the thickness W. However, too large values of the length L and the thickness W are associated with other drawbacks. For example, a large thickness W reduces the amount of light that may pass in and out of the dome camera 1. Further, a large length L of the abutment portion 11 makes it difficult to achieve a tight seal between the inwardly facing surface 8 and the light shielding element 6. The choice of the values of the thickness W and the length L is thus associated with a trade-off. The inventors have found that the length L preferably is larger than the thickness W. Further, the ratio between the length L and the thickness W is preferably larger than two, more preferably larger than three.

In a particular embodiment the thickness W is about 3.2 mm and the length is about 12 mm. For the same embodiment, a light absorption agent is advantageously present in a concentration such that the transmittance of light through the dome-shaped cover 3 in a direction of a normal of the dome-shaped cover 3 is about 70%. However, for larger values of the ratio between the length L and the thickness W lower concentrations would be possible. Likewise, for lower values of the ratio between the length L and the thickness W higher concentrations may be advantageous.

It will be appreciated that a person skilled in the art can modify the above-described embodiments in many ways and still use the advantages of the invention as shown in the embodiments above. For example, there are many alternatives for the shape of the light shielding element 6. For example the light shielding element 6 may be in the form of a half circular plate, wherein the circular portion of the periphery of the plate is arranged in abutment with the inwardly facing surface 8. Further it is to be noted that the present invention is applicable for fixed cameras (cameras that only look in one direction) as well as for cameras having a pan and tilt functionality, such as pan-tilt-zoom cameras. In the latter case, the optical member 4, the light shielding element 6, and optionally also the light emitting element 5 may be arranged to be simultaneously redirected in a pan and a tilt direction. For example, the optical member 4 and the light shielding element 6, and optionally also the light emitting element 5, may be arranged on a common plate which is movably arranged with respect to the dome-shaped cover such that the viewing direction of the optical member 4 may be adjusted. Thus, the invention should not be limited to the shown embodiments but should only be defined by the appended claims. Additionally, as the skilled person understands, the shown embodiments may be combined.

## Claims

1. A dome camera (1) comprising:
a base member (2),
a dome-shaped cover (3) arranged at said base member (2) whereby said dome-shaped cover (3) and said base member (2) define a space (7),
an optical member (4) comprising a lens (10) arranged in said space (7),
a light emitting element (5) arranged in said space (7) at a distance from said optical member (4), and
a light shielding element (6) arranged between said optical member (4) and said light emitting element (5) in said space (7) so as to shield said lens (10) of said optical member (4) from light emitted by said light emitting element (5), wherein said light shielding element (5) divides said space (7) into two separate subspaces (7a, 7b), wherein said optical member (4) is arranged in a first of said subspaces (7a) and the light emitting element (5) is arranged in a second of said subspaces (7b), and wherein said light shielding element (6) abuts an inwardly facing surface (8) of said dome-shaped cover (3) at a portion of the dome-shaped cover (3) in order to prevent leakage of light emitted by said light emitting element (5) from said second subspace (7b) into said first subspace (7a),
**characterized in that**
the portion of the dome-shaped cover (3) where the light shielding element (5) abuts the inwardly facing surface of the dome-shaped cover (3) is made of a material comprising a light absorbing agent which absorbs light in a wavelength range corresponding to light emitted by said light emitting element (5), and
wherein the light absorbing agent is an additive forming light absorbing particles within the material of the dome-shaped cover.

2. The dome camera (1) of claim 1, wherein only the portion of the dome-shaped cover (3) where the light shielding element abuts the inwardly facing surface of the dome-shaped cover (3) is made of a material comprising a light absorbing agent.

3. The dome camera (1) of any of claims 1-2, wherein a portion (11) of the light shielding element (6) is in abutment with the inwardly facing surface (8) of the dome-shaped cover (3), and a length L of said portion (11) of said light shielding element (6) is larger than a thickness W of said dome-shaped cover (3), wherein said length L is the shortest distance along said inwardly facing surface (8) between an inner point (14a) of said portion and an outer point (14b) of said portion, and wherein said thickness W corresponds to the shortest distance between said inwardly facing surface (8) and an outwardly facing surface (9) of the dome-shaped cover (3).

4. The dome camera (1) of claim 3, wherein a ratio of said length L to said thickness W is larger than two and preferably larger than three.

5. The dome camera (1) of any of the preceding claims, wherein said light absorbing agent comprises a pigment.

6. The dome camera (1) of any of the preceding claims, wherein said light emitting element (5) is arranged to emit infrared light, and wherein said light absorbing agent comprises an IR-absorbing agent.

7. The dome camera (1) of any of the preceding claims, wherein said optical member (4) is arranged at said base member (2) and said light shielding element (6) surrounds said optical member (4) in a direction perpendicular to an optical axis A of said optical member (4).

8. The dome camera (1) of claim 7, wherein said light shielding element (6) has a circular-symmetric shape with respect to said optical axis A.

9. The dome camera (1) of any of claims 7-8, wherein a cross-section of said portion (11) of the light shielding element (5) taken perpendicularly to said optical axis A has an essentially circular shape.

## Patentansprüche

1. Dome-Kamera (1) mit:
einem Basisbauteil (2),
einer kuppelförmigen Abdeckung (3), die auf dem Basisbauteil (2) angeordnet ist, wodurch die kuppelförmigen Abdeckung (3) und das Basisbauteil (2) einen Raum (7) festlegen,
einem optischen Bauteil (4), das eine Linse (10) aufweist, die im Raum (7) angeordnet ist,
einem Lichtabstrahlelement (5), das im Raum (7) in einem Abstand vom optischen Bauteil (4) angeordnet ist, und
einem Lichtabschirmelement (6), das im Raum (7) zwischen dem optischen Bauteil (4) und dem Lichtabstrahlelement (5) angeordnet ist, um so die Linse (10) des optischen Bauteils (4) gegen das Licht abzuschirmen, das vom Lichtabstrahlelement (5) aus abgestrahlt wird, wobei das Lichtabstrahlelement (5) den Raum (7) in zwei getrennte Teilräume (7a, 7b) unterteilt, wobei das optische Bauteil (4) in einem ersten von den Unterräumen (7a) angeordnet ist und das Lichtabstrahlelement (5) in einem zweiten von den Unterräumen (7b) angeordnet ist und wobei das Lichtabschirmelement (6) an einer nach innen gerichteten Fläche (8) der kuppelförmigen Abdeckung (3) an einem Teilbereich der kuppelförmigen Abdeckung (3) anliegt, um ein Austreten des Lichts, das von dem Lichtabstrahlelement (5) abgestrahlt wird, aus dem zweiten Unterraum (7b) in den ersten Unterraum (7a) zu verhindern,
**dadurch gekennzeichnet, dass**
der Teilbereich der kuppelförmigen Abdeckung (3) dort, wo das Lichtabschirmelement (5) an der nach innen gerichteten Fläche der kuppelförmigen Abdeckung (3) anliegt, aus einem Material besteht, das einen Licht absorbierenden Stoff aufweist, der Licht in einem Wellenlängenbereich absorbiert, der dem Licht entspricht, das vom Lichtabstrahlelement (5) abgestrahlt wird, und
wobei der Licht absorbierende Stoff ein Zusatzstoff ist, der in dem Material der kuppelförmigen Abdeckung Licht absorbierende Teilchen ausbildet.

2. Dome-Kamera (1) nach Anspruch 1, wobei nur der Teilbereich der kuppelförmigen Abdeckung (3), wo das Lichtabschirmelement an der nach innen gerichteten Fläche der kuppelförmigen Abdeckung (3) anliegt, aus einem Material besteht, das einen Licht absorbierenden Stoff aufweist.

3. Dome-Kamera (1) nach einem der Ansprüche 1-2, wobei ein Teilbereich (11) des Lichtabschirmelements (6) bündig an der nach innen gerichteten Fläche (8) der kuppelförmigen Abdeckung (3) anliegt und eine Länge L des Teilbereichs (11) des Lichtabschirmelements (6) größer als eine Dicke W der kuppelförmigen Abdeckung (3) ist, wobei die Länge L der kürzeste Abstand entlang der nach innen gerichteten Fläche (8) zwischen einem inneren Punkt (14a) des Teilbereichs und einem äußeren Punkt (14b) des Teilbereichs ist und wobei die Dicke W dem kürzesten Abstand zwischen der nach innen gerichteten Fläche (8) und einer nach außen gerichteten Fläche (9) der kuppelförmigen Abdeckung (3) entspricht.

4. Dome-Kamera (1) nach Anspruch 3, wobei ein Verhältnis der Länge L zur Breite W größer als zwei und vorzugsweise größer als drei ist.

5. Dome-Kamera (1) nach einem der vorhergehenden Ansprüche, wobei der Licht absorbierende Stoff ein Pigment aufweist.

6. Dome-Kamera (1) nach einem der vorhergehenden Ansprüche, wobei das Lichtabstrahlelement (5) eingerichtet ist, Infrarotlicht abzustrahlen, und wobei der Licht absorbierende Stoff einen IR-absorbierenden Stoff aufweist.

7. Dome-Kamera (1) nach einem der vorhergehenden Ansprüche, wobei das optische Bauteil (4) an dem Basisbauteil (2) angeordnet ist und das Lichtabschirmelement (6) das optische Bauteil (4) in einer Richtung umschließt, die senkrecht zu einer optischen Achse A des optische Bauteil (4) ist.

8. Dome-Kamera (1) nach Anspruch 7, wobei das Lichtabschirmelement (6) eine kreissymmetrische Gestalt bezüglich der optischen Achse A aufweist.

9. Dome-Kamera (1) nach einem der Ansprüche 7-8, wobei ein Querschnitt des Teilbereichs (11) des Lichtabschirmelements (5) senkrecht zur optischen Achse A genommen eine im Wesentlichen kreisförmige Gestalt aufweist.

## Revendications

1. Caméra à dôme (1) comprenant :
un élément de base (2),
un couvercle en forme de dôme (3) disposé au niveau dudit élément de base (2) ledit couvercle en forme de dôme (3) et ledit élément de base (2) définissant un espace (7),
un élément optique (4) comprenant une lentille (10) disposée dans ledit espace (7),
un élément électroluminescent (5) disposé dans ledit espace (7) à distance dudit élément optique (4), et
un élément faisant écran à la lumière (6) disposé entre ledit élément optique (4) et ledit élément électroluminescent (5) dans ledit espace (7) afin d'abriter ladite lentille (10) dudit élément optique (4) de la lumière émise par ledit élément électroluminescent (5), ledit élément électroluminescent (5) divisant ledit espace (7) en deux sous-espaces séparés (7a, 7b), ledit élément optique (4) étant disposé dans un premier desdits sous-espaces (7a) et l'élément électroluminescent (5) étant disposé dans un second desdits sous-espaces (7b), et ledit élément faisant écran à la lumière (6) butant contre une surface tournée vers l'intérieur (8) dudit couvercle en forme de dôme (3) au niveau d'une section du couvercle en forme de dôme (3) afin d'empêcher la fuite de lumière émise par ledit élément électroluminescent (5) dudit second sous-espace (7b) au premier sous-espace (7a),
**caractérisée en ce que**
la section du couvercle en forme de dôme (3) où l'élément faisant écran à la lumière (5) bute contre la surface tournée vers l'intérieur du couvercle en forme de dôme (3) est composée d'un matériau contenant un agent absorbant la lumière dans une plage de longueur d'onde correspondant à la lumière émise par ledit élément électroluminescent (5), et
l'agent absorbant la lumière étant un additif formant des particules absorbant la lumière dans le matériau du couvercle en forme de dôme.

2. Caméra à dôme (1) selon la revendication 1, dans laquelle seulement la section du couvercle en forme de dôme (3) où l'élément faisant écran à la lumière bute contre la surface tournée vers l'intérieur du couvercle en forme de dôme (3) est composée d'un matériau contenant un agent absorbant la lumière.

3. Caméra à dôme (1) selon l'une quelconque des revendications 1 et 2, dans laquelle une section (11) de l'élément faisant écran à la lumière (6) est en butée avec la surface tournée vers l'intérieur (8) du couvercle en forme de dôme (3), une longueur L de la dite section (11) dudit élément faisant écran à la lumière (6) est supérieure à une épaisseur W dudit couvercle en forme de dôme (3), ladite longueur L étant la plus courte distance le long de ladite surface tournée vers l'intérieur (8) entre un point interne (14a) de ladite section et un point externe (14b) de ladite section, et ladite épaisseur W correspondant à la plus courte distance entre ladite surface tournée vers l'intérieur (8) et une surface tournée vers l'extérieur (9) du couvercle en forme de dôme (3).

4. Caméra à dôme (1) selon la revendication 3, dans laquelle un ratio entre ladite longueur L et ladite épaisseur W est supérieur à deux et de préférence supérieur à trois.

5. Caméra à dôme (1) selon l'une quelconque des revendications précédentes, dans laquelle ledit agent d'absorption de lumière contient un pigment.

6. Caméra à dôme (1) selon l'une quelconque des revendications précédentes, dans laquelle ledit élément électroluminescent (5) est conçu pour émettre de la lumière infrarouge et ledit agent d'absorption de lumière comprenant un agent d'absorption d'IR.

7. Caméra à dôme (1) selon l'une quelconque des revendications précédentes, dans laquelle ledit élément optique (4) est disposé au niveau dudit élément de base (2) et ledit élément faisant écran à la lumière (6) entoure ledit élément optique (4) dans un sens perpendiculaire à un axe optique A dudit élément optique (4).

8. Caméra à dôme (1) selon la revendication 7, dans laquelle ledit élément faisant écran à la lumière (6) a une forme en symétrie circulaire par rapport audit axe optique A.

9. Caméra à dôme (1) selon l'une quelconque des revendications 7 à 8, dans laquelle une coupe transversale de ladite section (11) de l'élément faisant écran à la lumière (5) réalisé perpendiculairement audit axe optiques A a une forme sensiblement circulaire.
